# EUROPEAN PATENT APPLICATION

(11) **EP 3 748 045 A1**
(43) Date of publication of application: **09.12.2020**
(21) Application number: 19382471.1
(22) Date of filing: 06.06.2019
(51) Int. Cl.: C25D 3/38, B64D 45/02, C25D 5/50, C25D 5/54, C25D 15/00

(54) **METHOD FOR MANUFACTURING A HYBRID MATERIAL FOR CONDUCTING ELECTRICAL CURRENTS**

(71) Applicant: Airbus Operations, S.L.U., 28906 Getafe (Madrid) (ES)
(72) Inventor: GARCÍA MARTÍNEZ, Valentin, 28906 Getafe (Madrid) (ES); MARTÍN MORENO, Zulima, 28906 Getafe (Madrid) (ES); NOGUEROLES VIÑES, Pedro, 28906 Getafe (Madrid) (ES); MOKRY LOPEZ, Guillermo, 28906 Getafe (Madrid) (ES); VILATELA GARCIA, Juan José, 28906 Getafe (Madrid) (ES); BASELGA LLIDO, Juan, 28906 Getafe (Madrid) (ES); POZUELO DE DIEGO, Javier, 28906 Getafe (Madrid) (ES); SANZ FEITO, Javier, 28906 Getafe (Madrid) (ES)
(74) Representative: Elzaburu S.L.P.

(57) **Abstract**

Method for manufacturing a hybrid material for conducting electrical currents, which comprises the following steps:
- providing a film of aligned carbon nanotubes with micro-porosity as a substrate, the micro-porosity having a size between 1 and 100 microns,
- electrodeposition on the substrate with an aqueous solution of copper salts with addition of surfactant, and
- thermal anneal in a reducing atmosphere, at a temperature of 700ºC or higher, preferably between 700ºC and 800ºC, for a time of at least an hour, preferably between 1 hour and 2 hours.

## Description

### Field of the invention

This invention refers to a method for manufacturing a hybrid material for conducting electrical currents, both functional and non-functional. This hybrid material can be applied to electrical conductors for power distribution, grounding/earthing conductors for electrical safety, lightning strike protection or shielding materials, for example. It is appropriate to be used in non-metallic external structural parts that need to be protected against lightning strikes, and is also appropriate to be used for replacing electrical conductors, for example in aeronautical applications.

### Background of the invention

Currently the materials used for lighting protection are usually metallic conductors, such as aluminium or copper, which can dissipate the electrical energy resulting from a lightning strike.

Other solutions provide lightning strike protection trying to minimize the weight and consist of laminate or coated materials.

EP 2826809 A1 provides an improved lightning strike protection surface film which areal weight density of spaced vertically grown carbon nanotubes is less than about 500 grams per square meter, and from which fibers of length 100um are obtained. These fibers can be easily braided or woven into a mesh comparable to those found in commercial expanded copper foils.

EP 2363429 A1, referred to "low density lightning strike protection for use in airplanes", discloses a lightning strike protection film comprising a substrate which includes electrically conductive fibers coated with a mixture containing nanoparticles, or a metal screen coated with a mixture containing nanoparticles. The surface film can include a thermoset resin or polymer, e.g., an epoxy resin and/or a thermoplastic polymer, which can be cured, bonded, or painted on the composite structure. Low-density electrically conductive materials are disclosed, such as carbon nanofiber, copper powder, metal coated microspheres, metal-coated carbon nanotubes, single wall carbon nanotubes, graphite nanoplatelets and the like, that can be uniformly dispersed throughout or on the film. Low density conductive materials can include metal screens, optionally in combination with carbon nanofibers. Usually in the prior art proposals the bonds formed between carbonaceous materials and copper are very week, so the copper can be detached from carbon.

Therefore there is the need of having a method for manufacturing a hybrid material for conducting electrical currents with strong bonds between its starting materials, which at the same time has a density lower than that of copper and a similar electrical conductivity.

### Summary of the invention

The object of the present invention is to provide a method for manufacturing a hybrid material for conducting electrical currents which overcomes the prior art drawbacks.

The invention provides a method for manufacturing a hybrid material for conducting electrical currents that comprises the following steps:
- providing a film of aligned carbon nanotubes with micro-porosity as a substrate, the micro-porosity having a size between 1 and 100 microns,
- electrodeposition on the substrate with an aqueous solution of copper salts with addition of surfactant, and
- thermal anneal in a reducing atmosphere, at a temperature of 700ºC or higher, preferably between 700ºC and 800ºC, for a time of at least an hour, preferably between 1 hour and 2 hours.

As the carbon nanotubes have a porosity with a size between 1 and 100 microns, the copper (II) in the copper salts can be electrodeposited within the carbon structure of the nanotubes. The bond between reduced copper and aligned carbon nanotubes is strong enough so as to withstand cleansing, washing and manipulation operations, after the corresponding thermal anneal at 700ºC.

Another advantage of the invention is that it provides a hybrid material for conducting electrical currents with a specific electrical conductivity that is higher than that of copper, which is advantageous in applications where the weight is important, such as aeronautical applications like electrical distribution or electromagnetic hazards protection.

Other characteristics and advantages of the present invention will be clear from the following detailed description of several embodiments illustrative of its object in relation to the attached figures.

### Brief description of drawings

Figure 1 is a graph which shows the electrical conductivity as a function of electrodeposition time of the hybrid material (carbon nanotubes-copper) for conducting electrical currents of the invention.
Figure 2 is an image of the hybrid material (carbon nanotubes-copper) for conducting electrical currents of the invention before the thermal anneal stage.
Figure 3 is a graph which shows the specific electrical conductivity of the hybrid material (carbon nanotubes-copper) for conducting electrical currents of the invention compared to pure copper.
Figure 4 is a graph which shows the specific electrical conductivity vs the specific ampacity for the hybrid material (carbon nanotubes-copper) for conducting electrical currents of the invention and pure copper.

### Detailed description of the invention

The method for manufacturing a hybrid material for conducting electrical currents of the invention comprises the following steps:
- providing a film of aligned carbon nanotubes with micro-porosity as a substrate, the micro-porosity having a size between 1 and 100 microns,
- electrodeposition on the substrate with an aqueous solution of copper salts with addition of surfactant, and
- thermal anneal in a reducing atmosphere, at a temperature of 700ºC or higher, preferably between 700ºC and 800ºC, for a time of at least an hour, preferably between 1 hour and 2 hours. Voltage at which electrodeposition takes place is around 1 V for a 3x3cm CNT layer.

If lower voltages are applied, the time of deposition is required to be longer than 30 minutes to be able to see a homogeneous layer of copper. If a higher voltage is used, copper tends to grow on the outside of the CNT layer and not within the CNT structure. Therefore, the voltage must be low enough so that diffusion of copper ions inside the CNT structure may occur.

The film of aligned carbon nanotubes with micro-porosity is one of the starting materials. This starting material is already manufactured and is disclosed, for example, in Advanced Materials (Adv. Mater.) 2010, 22, 4959-4963, article "Yarn-Like Carbon Nanotube Fibers", by Juan J. Vilatela and Alan H. Windle.

The use of carbon nanotubes with micro-porosity as a substrate allows the penetration of the copper inside the substrate, favouring the obtention of a real hybrid material.

Also, the fact that the nanotubes are aligned allows the improvement of electrical conductivity and of the mechanical strength.

In the stage of electrodeposition of the invention, due to the redox reduction of the copper salts on the surface of the carbon nanotubes, a strong bond between the copper and the carbon nanotubes is obtained, which also allows the obtention of a real hybrid material.

An example of a copper salt to be used can be obtained from 100 ml of water, 6 g of Triton X-100 (to get 0,01 M surfactant), 24,9 g of CuSO4, and a pH 1 is achieved with sulphuric acid.

A typical surfactant that can be used in the electrodeposition stage can be sodium dodecyl sulfate, which is useful to break the surface tension of the liquid.

A thermal treatment consisting in a thermal anneal is performed in a reducing atmosphere to improve electrical conductivity and to improve the bonding of the copper inside the hybrid material. Temperatures of 700ºC or higher (preferably between 700ºC and 800ºC) are used for at least 1 hour (preferably between 1 hour and 2 hours).

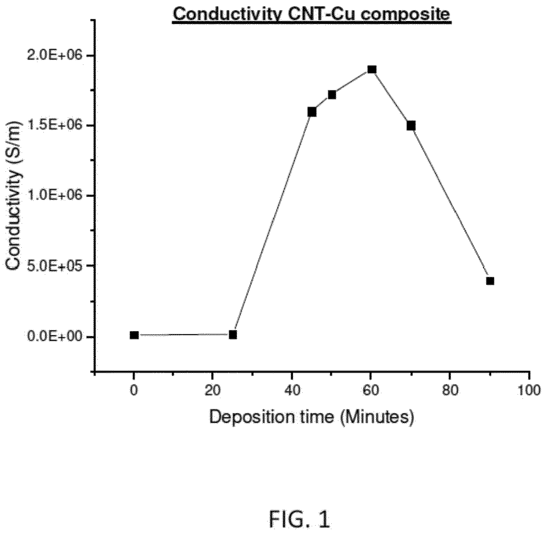

Figure 1 is a graph which shows the electrical conductivity as a function of electrodeposition time of the hybrid material (carbon nanotubes-copper) for conducting electrical currents of the invention. In this figure it can be seen that in a sample the higher electrical conductivity was obtained for deposition times around 60 minutes.

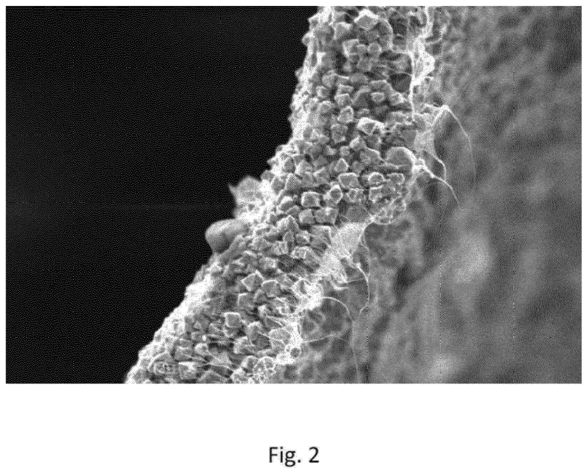

In figure 2 there is an image of the hybrid material (carbon nanotubes-copper) for conducting electrical currents of the invention before the thermal anneal stage. In this image it can be seen that the copper is also within the carbon nanotubes and not only on the external side, which makes the process different from a coating. In effect, the copper is deposited by electrodeposition on the starting architecture formed by the "exoskeleton" of carbon nanotubes.

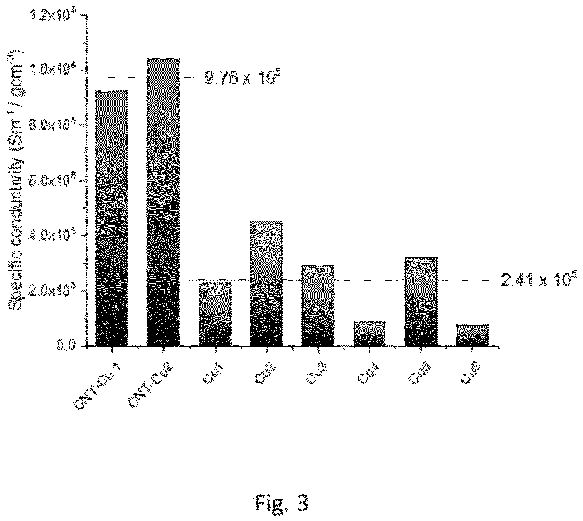

Figure 3 is a graph which shows the specific electrical conductivity of the hybrid material (carbon nanotubes-copper) for conducting electrical currents of the invention compared to pure copper for several samples. In this figure it can be seen that the samples of hybrid material (carbon nanotubes-copper CNT-Cu1 and CNT-Cu2) have a specific electrical conductivity greater than the samples of copper (Cu1, Cu2, Cu3, Cu4, Cu5 and Cu6).

As for the density of the hybrid material (carbon nanotubes-copper) of the invention, it is reduced by 34% compared to the density of pure copper:
- Pure copper: 8.9 g/cm3
- Hybrid material (carbon nanotubes-copper) after thermal anneal: 5,9 g/cm3

Accordingly, combining the high ampacity of the carbon nanotubes with the high electrical conductivity of the copper, the hybrid material obtained has a lower density than pure copper but a similar electrical conductivity.

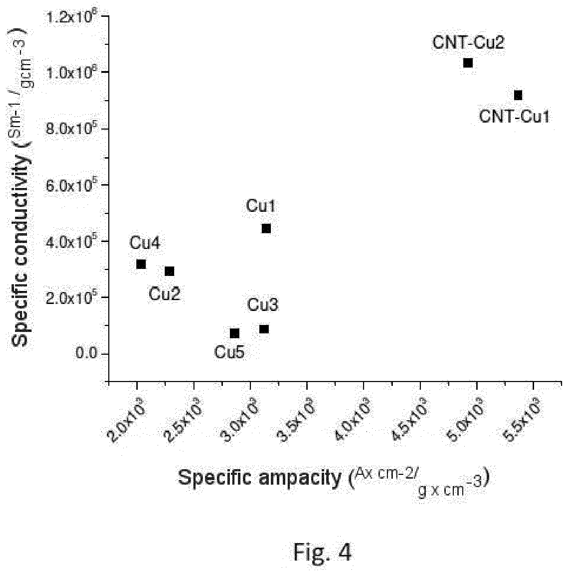

Figure 4 is a graph which shows the specific electrical conductivity vs the specific ampacity for the hybrid material (carbon nanotubes-copper) for conducting electrical currents of the invention and pure copper. It can be seen that the samples of the hybrid material (CNT-Cu1 and CNT-Cu2) have a higher specific electrical conductivity and a higher specific ampacity than those of the samples of pure copper (Cu1, Cu2, Cu3, Cu4 and Cu5).

Although the present invention has been fully described in connection with preferred embodiments, it is evident that modifications may be introduced within the scope thereof, not considering this as limited by these embodiments, but by the contents of the following claims.

## Claims

1. Method for manufacturing a hybrid material for conducting electrical currents, **characterized in that** it comprises the following steps:
- providing a film of aligned carbon nanotubes with micro-porosity as a substrate, the micro-porosity having a size between 1 and 100 microns,
- electrodeposition on the substrate with an aqueous solution of copper salts with addition of surfactant, and
- thermal anneal in a reducing atmosphere, at a temperature of 700ºC or higher, preferably between 700ºC and 800ºC, for a time of at least an hour, preferably between 1 hour and 2 hours.

2. Method for manufacturing a hybrid material for conducting electrical currents according to claim 1, wherein the aqueous solution of copper salts with surfactant is obtained from 100 ml of water, 6 g of Triton X-100, 24,9 g of CuSO4, and a pH 1 is achieved with sulphuric acid.

3. Method for manufacturing a hybrid material for conducting electrical currents according to any of the previous claims, wherein the surfactant is sodium dodecyl sulfate.
